Europäisches Patentamt

European Patent Office

Office européen des brevets

(19)

(11) Veröffentlichungsnummer: **0 198 153 B1**

# EUROPÄISCHE PATENTSCHRIFT

(12)

(45) Veröffentlichungstag der Patentschrift: **10.04.91**

(21) Anmeldenummer: **86100646.8**

(22) Anmeldetag: **18.01.86**

(51) Int. Cl.⁵: **B21B 37/10, C21D 1/02, C21D 9/52**

(54) **Verfahren zur Erwärmung von Knüppeln und Blöcken.**

(30) Priorität: **08.02.85 DE 3504341**

(43) Veröffentlichungstag der Anmeldung:
**22.10.86 Patentblatt 86/43**

(45) Bekanntmachung des Hinweises auf die
Patenterteilung:
**10.04.91 Patentblatt 91/15**

(84) Benannte Vertragsstaaten:
**BE DE FR GB SE**

(56) Entgegenhaltungen:
**DE-B- 1 058 528**
**DE-B- 2 728 028**
**DE-C- 3 222 940**

**PATENT ABSTRACTS OF JAPAN, Band 9, Nr.
135 (M-386)[1858], 11. Juni 1985, Seite 139 M
386**

**PATENT ABSTRACTS OF JAPAN, Band 5, Nr.
143 (M-87)[815], 9. September 1981**

**PATENT ABSTRACTS OF JAPAN, Band 7, Nr.
24 (M-189)[1169], 29. Januar 1983**

**STEEL IN THE USSR, Band 12, Nr. 3, März
1982, Seiten 131-133, London, GB; V.I. GUBIN-
SKII et al.: "Prospects for using flameelectric heating of steel in rolling practice"**

(73) Patentinhaber: **Asea Brown Boveri Aktiengesellschaft**
**Kallstadter Strasse 1**
**W-6800 Mannheim-Käfertal(DE)**

(72) Erfinder: **Krüger, Gerald, Dr. Dipl.-Ing.**
**Peter-Böhm-Strasse 17**
**W-6904 Eppelheim(DE)**

(74) Vertreter: **Rupprecht, Klaus, Dipl.-Ing. et al**
**c/o Asea Brown Boveri Aktiengesellschaft**
**Zentralbereich Patente Postfach 100351**
**W-6800 Mannheim 1(DE)**

EP 0 198 153 B1

## Beschreibung

Die Erfindung bezieht sich auf ein Verfahren zur Erwärmung von Knüppeln und Blöcken für ein nachfolgendes Walzen, bei dem diese in einem Aufwärmofen vorerwärmt und in einer nachgeordneten induktiven Erwärmungseinrichtung nacherwärmt werden.

Die induktive Vorblock- und Knüppelnacherwärmung ist bisher - aus Gründen des gegenüber der Gasofenerwärmung an den meisten Produktionsorten ungünstigeren Energiekostenverhältnisses - nur in wenigen Fällen zum Einsatz gekommen. Dabei standen folgende Einsätze im Vordergrund:

- Ausgleich der Abstrahlungsverluste bei größeren Transportwegen bzw. -zeiten zwischen Gasofen und Vorstraße oder zwischen Vor- und Zwischenstraße,
- Ausgleich des bei hoher Zuführungs- und niedriger Einzugsgeschwindigkeit auftretenden Temperaturkeiles (axialer Temperaturabfall) und
- Verminderung von Randentkohlung und/oder Zunderbildung durch unmittelbar vor der Walzung erfolgende induktive Nacherwärmung auf die Walztemperatur (DE-C 32 22 940).
- Ermöglichung der Verformung (z.B. Biegen) warmbrüchigen Materials durch rasche induktive Erwärmung lediglich einer dünnen Oberflächenschicht auf eine Temperatur, bei der die Bruchdehnung gering ist (DE-B 27 28 028).

Ferner ist es bekannt (H. Geisel: "Induktives Schnellerwärmen mit abgestufter Leistung", wt-Z. ind. Fertig. 60 (1970), Nr. 10, Seiten 585 bis 590) zur raschen Durchwärmung großer Werkstücke diese solange einer hohen induktiven Leistungskonzentration auszusetzen, bis die Oberflächentemperatur den höchstzulässigen Grenzwert erreicht hat. Anschließend wird der Aufheizvorgang während einer Temperatur-Ausgleichsphase bei reduzierter Leistung fortgesetzt, bis die Kerntemperatur des Werkstückes hinreichend hoch ist. Eine induktive Nacherwärmung wird nicht beschrieben. Ferner wird auch nicht auf Probleme des nachfolgenden Walzens eingegangen.

Die bisher installierten Kontistraßenleitsysteme beschränken sich im wesentlichen auf die Führung der mechanischen Prozeßbeeinflußung (koordinierte Drehzahlführung der Haupt- und Nebenantriebe) für alle Betriebszustände. Um das Umformverhalten beim Walzen, welches im wesentlichen durch die Stahlsorte, die Produkttemperatur und die Walzgeschwindigkeit bestimmt wird, zu beeinflussen, erfolgte bisher üblicherweise eine off-line-Beeinflußung des Walzprozesses durch Vorgabe der Kalibrierung, der Sollziehtemperatur und der Sollwalzgeschwindigkeit. Ferner wurde on-line eine Nachkorrektur der Gasofenziehtemperatur und des Walzgeschwindigkeitsniveaus vorgenommen. Die Möglichkeit der stahlsortenspezifischen Einflußnahme auf den Prozeß sind dabei jedoch sehr begrenzt.

Die Kalibrierreihe in bekannten Kontistraßen wird durch die gewünschte Fertigabmessung vorgegeben. Zusätzliche stahlsortenabhängige Veränderungen der Kalibrierung sind unerwünscht, da sie vermeidbare Umstellungs- und Einfahrzeiten nach sich ziehen. Daneben wird wegen der veränderten Längskraftverhältnisse das Störungsrisiko erhöht.

Die Gasofenziehtemperatur ist nur mit großer Zeitkonstante veränderlich. Eine Anpassung an unterschiedliche Stahlsorten ist bei kleineren Walzlosen und häufigem Loswechsel nicht möglich. Auch die genaue Einhaltung der vorgegebenen Ofenziehtemperatur ist bei der Ofenträgheit und den vielen unvorhersehbaren Produktionsstörzeiten kaum bzw. nur bei modellgestützter Ofenführung möglich.

Mit dem Walzgeschwindigkeitsniveau als schnell veränderlicher Stellgröße ist eine stahlsortenspezifische Beeinflußung der Umformung möglich. Eine Absenkung der Walzgeschwindigkeit wirkt sich aber unmittelbar negativ auf den Durchsatz aus.

Der härtere Wettbewerb zwingt auch die Betreiber von Walzstraßen in zunehmendem Maße zur Erniedrigung der Produktionskosten bei gleichzeitiger Erfüllung steigender Qualitätsanforderungen. Dabei stehen im Vordergrund die Erhöhung der Anlagenproduktivität (Erhöhung von Durchsatz und Ausbringung) und die Minimierung des Energieverbrauchs bzw. der Energiekosten (Fr. Marjanov: "Energieeinsparung in Walzwerken durch Temperaturführung", Fachberichte Hüttenpraxis Metallweiterverarbeitung, Vol. 22, No. 5, 1984, Seiten 489 bis 494).

Um den Durchsatz zu erhöhen besteht ein Trend zu größeren Einsatzgewichten (Anstichquerschnitten) und höheren Walzgeschwindigkeiten. Zur guten Produktionsauslastung muß das störungsfreie Walzen einer großen Produktionspalette beherrscht werden, was die Endabmessungen und die Stahlsorten betrifft. In vielen Fälle zwingen heute kleine Walzlose zu häufigem Walzprogrammwechseln.

Die Erfindung befaßt sich daher mit einem Verfahren zur Erwärmung von Knüppeln und Blöcken der eingangs genannten Art, bei dem unter den genannten Randbedingungen die hohen Qualitätsanforderungen stets gleichmäßig und reproduzierbar erfüllt werden. Dazu gehören enge Toleranzen, homogene Gefügeausbildung und Legierungsverteilung sowie absolute Freiheit von Oberflächen- und Innenfehlern. Ferner soll eine gezielte und reproduzierbare Einstellung von mechanischen Produkteigenschaften möglichst in einem Verfahrensschritt durch genaue Kontrolle der Temperatur während der Umformung (thermomechanisches Walzen) ermöglicht werden. Voraussetzung hierfür ist es, daß auch während des Walzens die Knüppel- und Blocktemperaturen in zulässigen Temperaturbereichen gehalten werden.

Der Erfindung liegt die Aufgabe zugrunde, ein Verfahren zur Erwärmung von Knüppeln oder Blökken der eingangs genannten Art anzugeben, bei dem deren Temperatureinstellung so erfolgt, daß mit großer Sicherheit auch während des Walzens das Über- und Unterschreiten des Temperaturbereiches, innerhalb dessen störungsfreies Walzen ermöglicht ist, vermieden werden kann.

Diese Aufgabe wird erfindungsgemäß durch die Merkmale des kennzeichnenden Teils des Patentanspruches 1 gelöst. Hierbei werden die in dem Aufwärmofen, vorzugsweise dem brennstoffbeheizten Ofen (Gasofen), auf eine möglichst niedrige Ziehtemperatur vorerwärmten Knüppel oder Blöcke in einer dem Aufwärmofen nachgeordneten induktive Erwärmungseinrichtung nacherwärmt, wobei durch die Nacherwärmung ein Temperaturprofil in den Knüppel- oder Blockquerschnitten derart eingestellt wird, daß die Oberflächentemperatur deutlich über der Kerntemperatur liegt und daß während des nachfolgenden Walzprozesses weder die Kerntemperatur noch die Oberflächentemperatur der Knüppel oder Blöcke die zulässigen Temperaturgrenzwerte über- bzw. unterschreitet. Die Einstellung des Temperaturprofils erfolgt durch Steuerung von Strom und Frequenz der induktiven Erwärmungseinrichtung unter Berücksichtigung des spezifischen elektrischen Widerstandes und der relativen Permeabilität des Erwärmungsgutes.

Die Temperaturgrenzwerte werden so festgelegt, daß einerseits Oberflächenfehler (insbesondere in der Vorstraße) durch Sicherstellung einer ausreichenden Oberflächentemperatur (sortenabhängig) vermieden werden, indem der Skineffekt der induktiven Erwärmung zum Ausgleich der starken Oberflächenabkühlung durch Abstrahlung und Walzenkontakt im Vorstraßenbereich genutzt wird. Andererseits wird zur Vermeidung von Innenfehlern durch Erschmelzen (bei steigerungsempfindlichen Sorten), die bei zu hohen Innentemperaturen aufgrund zu hoher Walzgeschwindigkeiten im Fertigstraßenbereich auftreten können, ein oberer Grenzwert für die Innentemperatur vorgegeben. Ein niedriger anfänglicher Wärmeinhalt stellt bei ausreichender Oberflächentemperatur sicher, daß die Innentemperatur bis zum letzten Walzgerüst keine unzulässig hohen Werte erreicht. Die obere Grenztemperatur kann aus dem Eisen-Kohlenstoff-Diagramm der jeweiligen Stahlsorten ermittelt werden.

Durch die Einstellung der niedrigst möglichen Walztemperatur, die stahlsortenabhängig zwischen 800 und 1200 °C liegt, kann eine wesentliche Energieeinsparung erreicht werden.

Eine besonders vorteilhafte Weiterbildung der Erfindung, die auch für sich selbst genommen von Bedeutung sein kann, ist darin zu sehen, daß die Temperatur der Knüppel oder Blöcke am Ende der Walzstraße (Walzendtemperatur) und/oder an einer charakteristischen Stelle der Walzstraße (Zwischentemperatur) gemessen und zur Steuerung der Erwärmungsparameter der induktiven Erwärmungseinrichtung herangezogen werden. Die Knüppel- oder Blocktemperatur kann durch berührungsloses Messen der Oberflächentemperatur mittels eine Pyrometers beispielsweise hinter der Vorstraße, der Zwischenstraße oder der Fertigstraße gemessen werden. Die Temperaturmeßwerte werden mit einstellbaren Sollwerten verglichen und zur Nachführung der induktiven Erwärmungseinrichtung herangezogen. Die Vorgabe der Temperatursollwerte erfolgt dabei stahlsortenabhängig.

Durch diese Temperaturrückführung auf die induktive Erwärmungseinrichtung läßt sich eine technologisch optimale Walzendtemperatur genau einhalten und/oder der Temperaturverlauf im Walzstraßenbereich kontrolliert einstellen und konstant halten. Dies ist insbesondere für das thermomechanische Walzen (K. Kaup et.al.: "Optimierung der Warmwalzbedingungen zur Verbesserung und Vergleichmäßigung der Werkstoffeigenschaften", Eisen und Stahl 104 (1984), Seiten 1017 bis 1024) von Vorteil, bei dem der Temperaturverlauf der Knüppel bzw. Blöcke in der Walzstraße und dem nachfolgenden Abkühlprozeß von entscheidender Bedeutung für die mechanischen Eigenschaften des Endproduktes sind.

Ferner läßt sich durch die Temperaturrückführung auch bei Stahlsortenwechsel und/oder Walzgeschwindigkeitsänderungen eine schnelle Anpassung der Knüppel- oder Blocktemperaturen an die vorgegebenen Sollwerte erreichen. Bei Stahlsortenwechsel werden entsprechende Sollwerte für die Ziehtemperatur, die Zwischentemperaturen und/oder die Walzendtemperatur eingestellt.

Die induktive Erwärmungseinrichtung ist ein Stellglied zur schnellen thermischen Prozeßbeeinflußung. Sie kann in vorteilhafter Weise zur Vermeidung von Störungen aufgrund mechanischer Überlastung der Gerüste, Walzen und Antiebe herangezogen werden, indem wenigstens der Antriebsstrom eines gefährdeten Walzgerüstes gemessen und zur Steuerung der Erwärmungsparameter der induktiven Erwärmungseinrichtung herangezogen wird. Beispielsweise wird bei Überschreiten eines vorgegebenen Antriebsstromwertes (Überlast) die Anstichtemperatur durch entsprechende Einstellung der induktiven Erwärmungseinrichtung angehoben, so daß das Walzgut weicher und leichter walzbar ist. Durch die schnelle Nachregelung kann die Überlastsituation rasch beseitigt werden. Auch durch diese Maßnahme läßt sich Energie sparen, da durch den Abbau des Sicherheitsabstandes die Ofenziehttemperatur weiter reduziert werden kann.

Einer weiteren vorteilhaften Weiterbildung der Erfindung zufolge wird durch die Steuerung der induktiven Erwärmungseinrichtung die Austrittstemperatur, das ist die Temperatur der Knüppel oder Blöcke vor dem Eintritt in das erste Walzgerüst, stahlsortenabhängig eingestellt. Hierdurch läßt sich bei gleichbleibender, niedriger Ofenziehttemperatur stahlsortenabhängig schnell die niedrigst mögliche Anstichtemperatur einstellen, wodurch Energie gespart werden kann.

In zweckmäßiger Weise ist die induktive Erwärmungseinrichtung aus mehreren hintereinander angeordneten Induktionsspulen zusammengesetzt, die in Gruppen oder einzeln angesteuert werden. Die Leistung und Frequenz (Eindringtiefe) jeder der Induktionsspulen läßt sich individuell ansteuern, so daß eine detaillierte Einstellung des Temperaturprofils im Knüppel oder Blockquerschnitt möglich ist.

Die Zeichnung stellt den Temperaturverlauf eines Walzgutes in einer Feinwalzstraße dar. Die gestrichelte Linie bezieht sich dabei jeweils auf die Kerntemperatur $T_k$ und die durchgezogene Linie auf die Oberflächentemperatur $T_0$ des Walzgutes.

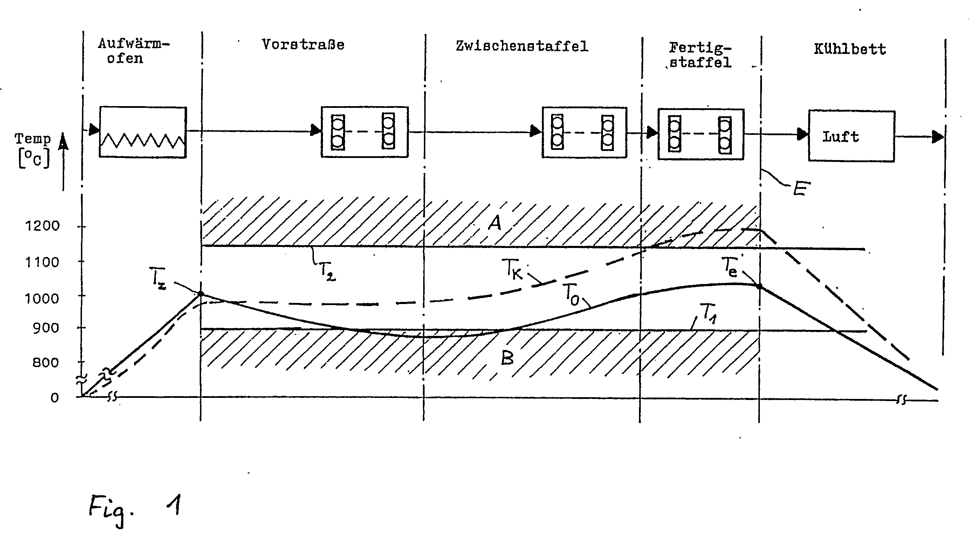

Figur 1 zeigt den Temperaturverlauf in einer Feinwalzstraße gemäß dem Stand der Technik, bei dem im Walzgutquerschnitt beim Eintritt in die Vorstraße kein wesentlicher Temperaturgradient vorhanden ist. Das Walzgut verläßt hier den Aufwärmofen bei einer Temperatur von ca. 1000° C, wobei die Oberflächentemperatur $T_0$ nur geringfügig über der Kerntemperatur $T_k$ des Walzgutes liegt. Während der Walzzeit in der Vorwalzstraße verliert das Walzgut infolge Abstrahlung und Walzenkontakt mehr Wärme als ihm durch Verformungsarbeit zugeführt wird. Hierbei bleibt zwar die Kerntemperatur $T_k$ etwa konstant, die Oberflächentemperatur $T_0$ sinkt jedoch stark ab und fällt unter den Temperaturgrenzwert $T_1$, bei dessen Unterschreiten die Gefahr von Oberflächenrissen auftritt.

Beim Walzen in der Zwischenstaffel ist die Verformungsarbeit größer als die Wärmeverluste infolge Abstrahlung und Walzenkontakt, so daß das Temperaturniveau des Walz gutes sowohl im Kern als auch auf der Oberfläche angehoben wird. Während die Oberflächentemperatur $T_0$ wieder in einen für das Walzen optimalen Temperaturbereich gelangt, steigt die Kerntemperatur $T_k$ stark an und überschreitet im Bereich der Fertigstaffel einen oberen Temperaturgrenzwert $T_2$, bei dessen Überschreiten die Gefahr des örtlichen Erschmelzens im Innern des Walzgutes und damit die Gefahr von Innenfehlern auftritt.

Die beiden Temperaturgrenzwerte $T_1$ und $T_2$ sind sortenabhängig. Sie können aus dem Eisen-Kohlenstoff-Diagramm bzw. aus den Sprödbruchdaten der zu walzenden Stahlsorte ermittelt werden.

Nach Verlassen der Fertigstaffel (bei der strichpunktierten Schnittlinie E) hat das Walzgut eine Walzendtemperatur erreicht, bei der gemäß Fig. 1 die Kerntemperatur $T_k$ weit oberhalb des oberen Temperaturgrenzwertes $T_2$ in der oberen Gefahrenzone A liegt, während die Oberflächentemperatur $T_0$ (Walzendtemperatur $T_e$) im für das Walzen günstigen Temperaturbereich zwischen den beiden Gefahrenzonen A,B (schraffierte Zonen) liegt. Im nachfolgenden Kühlbett wird das nun fertiggewalzte Material durch Luft oder andere Kühlmedien abgekühlt, so daß sowohl die Kern- als auch die Oberflächentemperatur absinken.

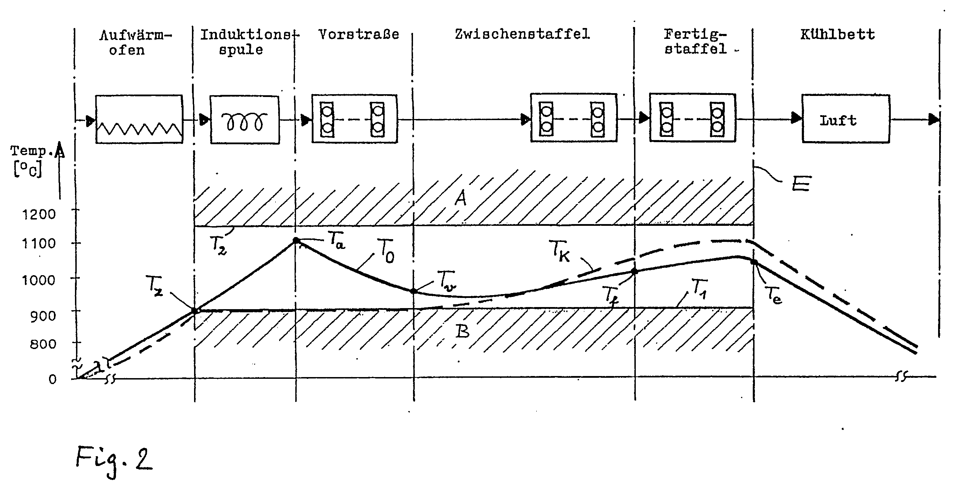

Figur 2 zeigt ebenfalls den Temperaturverlauf in einer Feinwalzstraße. Im Unterschied zu Figur 1 liegt der Figur 2 das erfindungsgemäße Verfahren zugrunde. Zwischen dem Aufwärmofen und der Vorstraße ist eine induktive Erwärmungseinrichtung angeordnet, die das Walzgut nacherwärmt. Der Aufwärmofen wärmt das Walzgut lediglich auf eine Temperatur auf, die bei dem unteren Temperaturgrenzwert $T_1$ liegt.

In der induktiven Erwärmungseinrichtung findet eine Nacherwärmung des Walzgutes statt. Durch Steuerung von Leistung und Frequenz der induktiven Erwärmungseinrichtung wird ein Oberflächenbereich des Walzgutes aufgeheizt, während die Kerntemperatur $T_k$ unverändert bleibt. In der der induktiven Erwärmungsanlage nachgeordneten Vorstraße sinkt die Oberflächentemperatur $T_0$ ab und die Kerntemperatur $T_k$ bleibt konstant. Im Unterschied zu Figur 1 unterschreitet die Oberflächentemperatur $T_0$ dabei jedoch nicht den unteren Temperaturgrenzwert $T_1$. Durch die geringe Ausgangstemperatur (Ziehtemperatur $T_z$) steigt die Kerntemperatur $T_k$ im Bereich der Zwischen staffel und Fertigstaffel auch bei hohen Walzgeschwindigkeiten nicht so weit an, daß sie den oberen Temperaturgrenzwert $T_2$ überschreitet.

Es können neben der Walzendtemperatur $T_e$ Zwischentemperaturen gemessen werden, die das Walzgut an charakteristischen Stellen der Walzstraße einnimmt. Zum Beispiel kann die Oberflächentemperatur $T_0$ des Walzgutes zwischen Vorstraße und Zwischenstaffel ($T_v$) oder zwischen Zwischenstaffel und Fertigstaffel ($T_f$) gemessen werden. Die Temperaturmeßwerte $T_e$, $T_v$, $T_f$ können mit vorgebbaren Sollwerten verglichen und zur Steuerung der induktiven Erwärmungseinrichtung herangezogen werden. Dabei wird durch die induktive Erwärmungseinrichtung aufgrund der Temperaturmeßwerte $T_e$, $T_v$, $T_f$ eine vorbestimmbare Temperaturverteilung im Walzgutquerschnitt eingestellt. Ferner läßt sich durch Ansteuerung der induktiven Erwär-

mungseinrichtung die Anstichtemperatur $T_a$ des Walzgutes einstellen.

Zur Realisierung des erfindungsgemäßen Verfahrens können für eine kontrollierte Prozeßführung neuzeitliche und stelltechnische Einrichtungen und Strategien zum Einsatz kommen. Die induktive Erwärmungseinrichtung dient daher als Stellglied zur schnellen Prozeßbeeinflußung und das Leitsystem übernimmt die Führung und Kontrolle der feinfühligen, sorten- und prozeßspezifischen, thermischen Beeinflußung des Produktes.

Als aktuelle Prozeßinformation werden dem Leitsystem bedarfsweise folgende Meßgrößen zur Verfügung gestellt:

- Ofenziehtemperatur $T_z$ (Oberfläche)
- Spulenauslauftemperatur $T_a$ (Oberfläche)
- mittlerer Ofendurchsatz
- ggf. Walzzwischentemperaturen $T_v$, $T_f$ - (Oberfläche)
- Walzendtemperatur $T_e$ (Oberfläche)
- Walzgeschwindigkeiten
- Antriebsströme
- Antriebsdrehzahlen

Die nachfolgend genannten Werte sind walzprogrammspezifisch abgespeichert und stehen für jede aktuelle Walzung nach Abruf zur Verfügung:

- Stahlsorte
- stahlsortenspezifische Grenztemperaturen $T_1$, $T_2$
- Walzprogramm (Anfangs- und Endabmessung, Drehzahlreihe)
- Sollanfangstemperatur (ggf. axiales Sollprofil)
- Sollendtemperatur
- ggf. Sollzwischentemperaturen
- Sollwalzgeschwindigkeiten
- Sollerwärmungsleistung (induktiv)
- Sollausgleichzeiten (nach der induktiven Erwärmung)
- Antriebsgrenzbelastungen

## Ansprüche

1. Verfahren zur Erwärmung von Knüppeln und Blöcken für ein nachfolgendes Walzen, bei dem diese in einem Aufwärmofen vorerwärmt und in einer nachgeordneten induktiven Erwärmungseinrichtung nacherwärmt werden, dadurch gekennzeichnet, daß die Vorerwärmung beim Erreichen der minimalen Temperatur $T_1$ beendet wird, durch die induktive Nacherwärmung nur die Temperatur in einem oberflächennahen Bereich angehoben wird, wobei die entstehende Temperaturdifferenz zwischen Oberflächentemperatur $T_0$ und der Kerntemperatur $T_k$ sich danach richtet, daß während der anschließenden Walzung weder die Kerntemperatur $T_k$ noch die Oberflächentemperatur $T_0$ die maximal zulässige Walztemperatur $T_2$ überschreiten und die minimal zulässige Temperatur $T_1$ unterschreiten.

2. Verfahren nach Anspruch 1, dadurch gekennzeichnet, daß die Walzendtemperatur ($T_e$) der Knüppel oder Blöcke gemessen und zur Steuerung der Erwärmungsparameter der induktiven Erwärmungseinrichtung herangezogen wird.

3. Verfahren nach Anspruch 1 oder 2, dadurch gekennzeichnet, daß wenigstens eine Zwischentemperatur ($T_a$,$T_v$,$T_f$) der Knüppel oder Blöcke an einer charakteristischen Stelle der Walzstraße gemessen und zur Steuerung der Erwärmungsparameter der induktiven Erwärmungseinrichtung herangezogen wird.

4. Verfahren nach einem der Ansprüche 1 bis 3, dadurch gekennzeichnet, daß wenigstens der Antriebsstrom eines Walzgerüstes gemessen und zur Steuerung der Erwärmungsparameter der induktiven Erwärmungseinrichtung her angezogen wird

5. Verfahren nach einem der Ansprüche 1 bis 4, dadurch gekennzeichnet, daß durch Steuerung der induktiven Erwärmungseinrichtung die Anstichtemperatur ($T_a$) der Knüppel oder Blöcke stahlsortenabhängig eingestellt wird.

6. Verfahren nach einem der Ansprüche 1 bis 5, dadurch gekennzeichnet, daß die induktive Erwärmungseinrichtung aus mehreren hintereinander angeordneten Induktionsspulen besteht, die in Gruppen oder einzeln angesteuert werden.

## Claims

1. Method of heating billets and ingots for subsequent rolling, in which these billets and ingots are preheated in a heating-up furnace and are reheated in an inductive heating device arranged downstream, characterised in that the preheating is ended upon reaching the minimum temperature $T_1$, and only the temperature in an area near the surface is raised by the inductive reheating, the temperature difference arising between surface temperature $T_0$ and core temperature $T_k$ being such that neither the core temperature $T_k$ nor the surface temperature $T_0$ exceed the maximum permissible rolling temperature $T_2$ or fall below the minimum permissible temperature $T_1$ during

the subseguent rolling.

2. Method according to Claim 1, characterized in that the final rolling temperature $(T_o)$ of the billets or ingots is measured and used to control the heating parameters of the inductive heating device.

3. Method according to Claim 1 or 2, characterized in that at least one intermediate temperature $(T_a, Tv, T_f)$ of the billets or ingots is measured at a characteristic point of the rolling mill train and is used to control the heating parameters of the inductive heating device.

4. Method according to one of Claims 1 to 3, characterized in that at least the drive current of a roll stand is measured and is used to control the heating parameters of the inductive heating device.

5. Method according to one of Claims 1 to 4, characterized in that the initial-pass temperature $(T_a)$ of the billets or ingots is set as a function of the type of steel by controlling the inductive heating device.

6. Method according to one of Claims 1 to 5, characterised in that the inductive heating device consists of a plurality of induction coils which are arranged one behind the other and are activated in groups or individually.

**Revendications**

1. Procêdê pour le réchauffage de billettes et de blooms pour un laminage consécutif, dans lequel ceux-ci sont préchauffés dans un four de préchauffage et réchauffés dans un dispositif de réchauffage par induction situé en aval, caractérisé en ce que le préchauffage est arrêté lorsque la température minimale $T_1$ est atteinte, que, par le réchauffage par induction, seule la température dans une zone proche de la surface est relevée, le gradient de température entre la température superficielle $T_0$ et la température à coeur $T_k$ étant choisi tel, que, au cours du laminage qui fait suite, ni la température à coeur $T_k$, ni la température superficielle $T_0$ ne dépassent la température de laminage $T_2$ maximale admissible et la température de laminage $T_1$ minimale admissible.

2. Procédé selon la revendication 1, caractérisé en ce que la température en fin de laminage $(T_e)$ des billettes ou des blooms est mesurée et utilisée pour commander les paramètres de réchauffage du dispositif de réchauffage par induction.

3. Procédé selon la revendication 1 ou 2, caractérisé par le fait qu'au moins une température intermédiaire $(T_a, T_v, T_f)$ des billettes ou des blooms est mesurée en un point caractéristique du train de laminoirs et est utilisée pour commander les paramètres de réchauffage du dispositif de réchauffage par induction.

4. Procédé selon l'une des revendications 1 à 3, caractérisé en ce qu'au moins la tension d'entraînement d'une cage de laminage est mesurée et est utilisée pour la commande des paramètres de réchauffage du dispositif de réchauffage par induction.

5. Procédé selon l'une des revendications 1 à 4, caractérisé en ce que la température de passe initiale $(T_a)$ des hillettes ou des blooms est réglée en fonction de la nuance d'acier par commande du dispositif de réchauffage par induction,

6. Procédé selon l'une des revendications 1 à 5, caractérisé en ce que le dispositif de réchauffage par induction se compose de plusieurs bobines d'induction placées les unes derrière les autres, qui sont commandées en groupes ou isolément.

Aufwärmofen

Vorstraße

Zwischenstaffel

Fertigstaffel

Kühlbett

Luft

Temp
[°C]

1200

1100

1000

900

800

0

A

B

E

$T_2$

$T_K$

$T_0$

$T_1$

$T_e$

$T_z$

Fig. 1

Fig. 2

EP 0 198 153 B1